(19) Europäisches Patentamt

European Patent Office

Office européen des brevets

(11) Numéro de publication: **0 133 601**

**B1**

(12) ## FASCICULE DE BREVET EUROPÉEN

(45) Date de publication du fascicule du brevet:
25.02.87

(21) Numéro de dépôt: **84401457.1**

(22) Date de dépôt: **10.07.84**

(51) Int. Cl.⁴: **F 16 K 31/10**

---

54 **Electro-vanne de faible puissance.**

---

(30) Priorité: **12.08.83 FR 8313249**

(43) Date de publication de la demande:
**27.02.85 Bulletin 85/9**

(45) Mention de la délivrance du brevet:
**25.02.87 Bulletin 87/9**

(84) Etats contractants désignés:
**CH DE GB IT LI SE**

(56) Documents cité:
**EP-A-0 074 420**
**DE-A-2 724 901**
**FR-A-2 131 338**

(73) Titulaire: **LA TELEMECANIQUE ELECTRIQUE, 33
bis, avenue du Maréchal Joffre, F-92000 Nanterre
(FR)**

(72) Inventeur: **Nicolas, Michel, 1, rue des Dentellières
Saint Germain de la Grange, F-78640 Neauphle le
Chateau (FR)**
Inventeur: **Lepine, Michel, 7, allée du Parc, F-92220
Herblay (FR)**

(74) Mandataire: **Marquer, Francis, 35, Avenue Victor
Hugo Résidence Chamfleury, F-78190 Voisins- le-
Bretonneux (FR)**

LIBER, STOCKHOLM 1987

EP 0 133 601 B1

## Description

L'invention se rapporte à une électro-vanne comprenant d'une part, un électro-aimant ayant une pièce mobile guidée axialement et magnétisable, rappelée par un ressort dans une première position de repos et attirée en butée dans une seconde position de travail par une pièce mobile magnétisable fixe lors de l'excitation de la bobine et, d'autre part, un corps de vanne qui est associé à cet électro-aimant et dans lequel se déplacent en regard de deux orifices, reliés respectivement à une ouverture d'entrée de pression et à une ouverture d'échappement, deux faces de clapet relié à la pièce mobile au moyen d'une pièce de transmission pivotante, dont l'une obture l'orifice de pression lorsque ladite pièce mobile est au repos, tandis que l'autre obture l'orifice d'échappement lorsque ladite pièce mobile est en position de travail, de façon à relier une ouverture d'utilisation placée sur une face externe du corps, à l'un de ces deux orifices. De telles électro-vannes sont largement utilisées pour délivrer des fluides comprimés, soit à des appareils utilisateurs tels que des vérins lorsqu'elles sont de dimensions importantes, soit, lorsqu'elles sont de dimensions réduites, à des entrées de commande de distributeurs qui délivrent des fluides à des appareils pneumatiques de toute nature (voir par exemple DE-A-2 724 901).

Lorsque les dimensions des électro-vannes deviennent très petites, par exemple pour diminuer la consommation des électro-aimants afin que leur alimentation puisse être faite directement par des installations électroniques de commande automatique telles que les séquenceurs programmables, le rôle que prennent dans le fonctionnement les tolérances de fabrication ainsi que les tensions d'alimentation et la température ambiante, devient tel que toute dispersion des cotes dimensionnelles risque d'entrainer des aléas de fonctionnement.

Comme le constructeur n'est pas maitre de la température dans laquelle seront placées les électro-vannes et que l'élévation de ce paramètre se combine défavorablement avec des baisses de tension dont l'apparition est souvent inévitable, pour diminuer la puissance de l'ordre du watt que développent de tels électro-aimants miniaturisés, il est indispensable que la totalisation des tolérances de fabrication ne nécessite pas un surcroît de puissance pour que l'exécution des fonctions de commutation pneumatique soit faite dans de bonnes conditions. Parmi ces conditions figurent notamment le respect de l'entrefer de départ de l'électro-aimant et la maîtrise des cotes qui inverviennent dans l'alignement des surfaces des clapets avec les sièges des orifices qui les reçoivent.

Les appareils disponibles sur le marché, en particulier ceux qui utilisent un même clapet placé entre un orifice de pression et un orifice d'échappement doivent, pour assurer un bon fonctionnement, imposer aux pièces mécaniques des tolérances de fabrication très serrées et aux matériaux une très grande régularité des propriétés élastiques, qui augmentent sensiblement les coûts techniques de fabrication.

Ces coûts comprennent notamment soit le rejet des appareils défectueux, soit les rechanges prévues dans les garanties, soit encore les complications supplémentaires ou le temps de main d'oeuvre nécessaire à l'exécution de réglages sur des appareils dont les dimensions s'écartent trop des tolérances de fabrication; dans certains cas, il est parfois nécessaire d'apparier des pièces appelées à coopérer.

L'invention se propose par suite de fournir une électro-vanne miniature présentant la constitution générale mentionnée ci-dessus, dont les dimensions de la face du corps portant les ouvertures soient voisines de 15 x 15 mm, et dont la disposition interne diminue sensiblement le rôle néfaste que jouent les dispersions de fabrication ou le vieillissement des matériaux de façon à limiter les puissances que l'électro-aimant devra développer.

Selon l'invention, le but visé est atteint grâce au fait que ces orifices sont placés à des distances différentes de l'axe de rotation d'une pièce de transmission pivotante associée aux mouvements de la pièce mobile pour coopérer avec des faces d'obturation appartenant à deux clapets distincts de façon telle que l'une de ces distances soit supérieure à l'autre, le clapet de l'orifice de pression étant porté par une extrémité de cette pièce mobile, tandis que la face d'obturation de l'autre clapet coopère élastiquement d'une part, uniquement avec l'orifice d'échappement lorsque la pièce mobile est au travail, et d'autre part, uniquement avec une extrémité mobile de la pièce de transmission contre laquelle cette face s'appuie lorsque la pièce mobile est au repos.

L'invention, ainsi que d'autres mesures propres à faciliter la fabrication seront mieux comprises à la lecture de la description qui suit.

Au dessin annexé:

La figure 1 représente une vue en élévation coupée par un plan Q visible à la figure 2 et contenant l'axe de la bobine de l'électro-aimant et ceux des orifices

La figure 2 illustre une vue de côté droit du corps de la vanne dépourvu de son couvercle;

La figure 3 montre une vue de dessus du corps de vanne coupé par un plan P visible à la figure 1;

La figure 4 représente une variante de réalisation d'une pièce de la vanne;

La figure 5 représente schématiquement les éléments mobiles de l'électro-vanne accompagnés de dimensions à prendre en compte; et

La figure 6 illustre un mode de réalisation de l'invention différent du mode préféré représenté dans les autres figures.

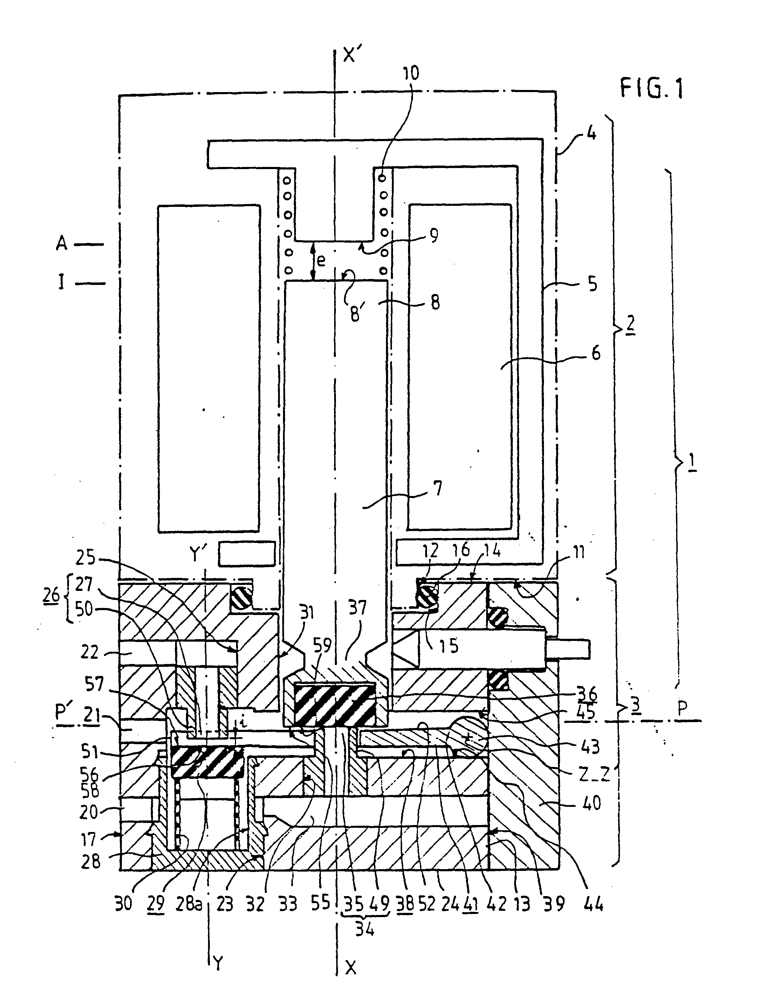

Une électro-vanne 1 visible à la figure 1, est formée par l'association d'un électro-aimant de faible puissance 2 et d'une petite vanne pneumatique 3.

L'électro-aimant dont les pièces fixes sont surmoulées pour former un corps 4 comprend une culasse de

2

circuit magnétique fixe 5, une bobine 6 dont les bornes de raccordement externes ne sont pas visibles sur la figure, et un noyau plongeur 7, mobile le long de l'axe XX' entre une position de repos I visible sur la figure, et une position de travail A pour laquelle une face 8' d'une extrémité interne 8 du noyau vient buter sur une surface d'un prolongement coaxial 9 de la culasse en comprimant un ressort de rappel 10. Le corps 4 présente en outre une surface d'application 11 perpendiculaire à l'axe, des moyens ou surfaces de centrage tels que 12 pour assurer son positionnement par rapport à l'électrovanne et des moyens de liaison, non représentés, pour l'associer à cette dernière.

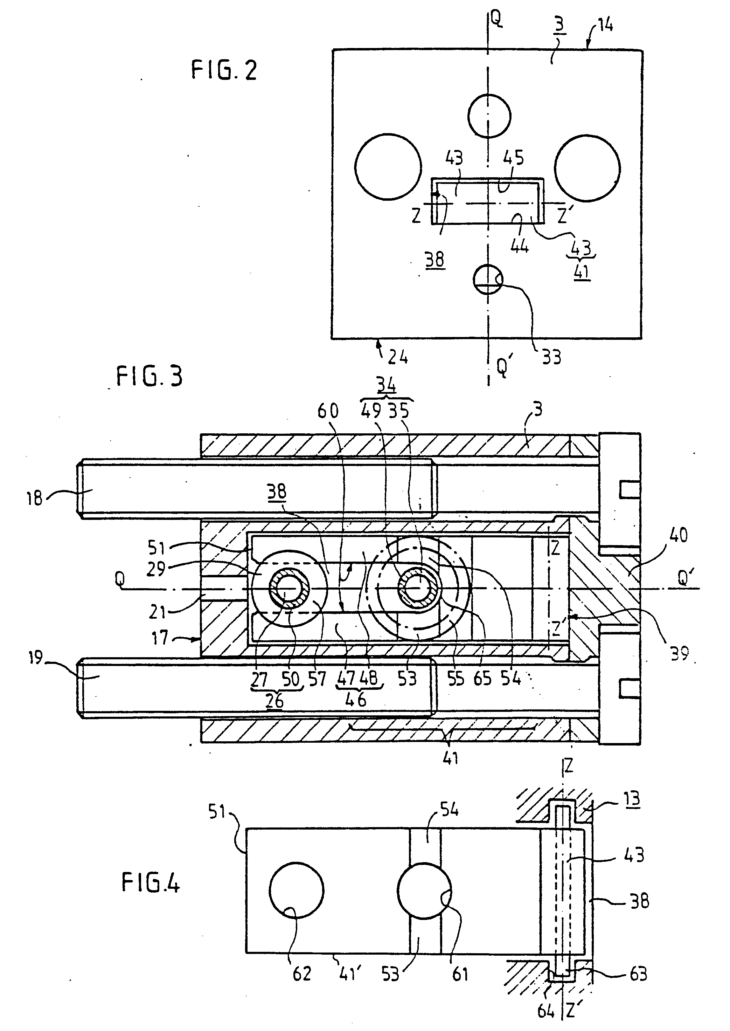

L'électro-vanne 3 dont le corps 13 sera métallique, plastique ou composite, présente sur celui-ci une surface d'appui 14 apte à recevoir la surface 11, une surface de centrage 15 qui coopère avec la surface 12 pour comprimer entre elles un joint d'étanchéité 16 et une face de fixation 17 qui sera appliquée, par exemple, par des vis 18, 19, visibles à la figure 3, sur un appareil ou organe pneumatique devant être commandé, mais non représenté. La face de fixation 17 présente trois ouvertures 20, 21, 22 qui servent respectivement

- à alimenter l'électro-vanne en fluide sous pression,
- à alimenter l'appareil ou organe utilisateur de fluide, et
- à évacuer le fluide sous pression provenant de cet utilisateur.

Le corps 3 de l'électro-vanne présente un certain nombre de logements et ouvertures destinés à recevoir les organes qui le constituent ou à en permettre le montage.

Une ouverture 23 d'axe YY' parallèle à XX' débouchant sur une face 24 opposée à la face 14, se prolonge par un alésage coaxial 25 relié à l'ouverture 22; cet alésage maintient par serrage une pièce annulaire 26 présentant un orifice d'échappement 27, tandis qu'un bouchon évidé 28 obture l'ouverture 23 et reçoit dans l'évidement 28a un clapet en matière élastique 29 et un faible ressort de rappel 30 qui tend à appliquer ce dernier contre l'orifice 27 placé en regard.

Une ouverture 31 coaxiale à XX' et débouchant sur la face 14 se prolonge par un alésage coaxial 32 qui débouche dans un canal 33 relié à l'ouverture de pression 20; dans le mode de réalisation illustré, qui n'est pas limitatif, ce canal traverse perpendiculairement l'ouverture 23 en contournant le bouchon 28; l'alésage 32 maintient par serrage une pièce annulaire 34 analogue à la précédente qui présente un orifice de pression 35 dirigé vers l'alésage 31.

Ces deux orifices 27, 35 qui sont donc parallèles et sont orientés en sens inverse ont leur siège sensiblement placé dans un plan PP' transversal.

En regard de cet orifice de pression est placé un clapet en matière élastique 36 qui est porté par une extrémité 37 du noyau plongeur 7 pénétrant dans l'ouverture 31; la surface active 59 de ce clapet est appliquée contre l'orifice 35 par le ressort de rappel 10, de sorte que la position de la pièce annulaire 34 détermine la position de repos I du noyau plongeur.

Une chambre 38 placée transversalement par rapport à l'axe XX' aboutit d'une part, à l'ouverture 21 et, d'autre part, à une face 39 qui est opposée à la face 17 et qui reçoit un couvercle de fermeture étanche 40 obturant également le canal 33.

Cette chambre relie également les orifices de pression et d'échappement à l'ouverture 21 et reçoit une pièce de transmission telle qu'un levier de transmission 41.

Ce levier qui est place sensiblement dans le plan PP' perpendiculaire à l'axe XX', présente à une extrémité 42 des moyens de pivotage constitués ici par un bourrelet cylindrique (43) placé avec un faible jeu entre deux surfaces opposées et parallèles 44, 45 de la chambre 38 voisines du couvercle. Ce levier qui s'étend en regard des axes XX' et YY' des orifices 35, 27, présente vers l'extrémité 51 opposée au bourrelet, la forme d'une fourche 46 dont des branches parallèles 47, 48 délimitent une ouverture oblongue 60 entourant des cols 49, 50 de faible diamètre appartenant aux pièces annulaires 34, respectivement 26 et entourent les orifices 35, respectivement 27, (voir figure 3).

La surface supérieure 52 de ce levier présente sur chaque branche, un bossage 53, respectivement 54 qui est placé en regard de deux portions opposées de la surface annulaire 55 de l'extrémité 37 du noyau plongeur entourant le clapet 36, voir figures 1 et 3, tandis que les surfaces inférieures 56, 58, présentes aux extrémités des branches du levier, reçoivent en deux points opposés de la surface active 57 du clapet 29, le faible effort de rappel développé par le ressort 30, (voir figures 1 et 3); ce même ressort exerce sur le levier 41 un faible couple qui applique les bossages 53, 54 sur la surface 55 de sorte que le levier trouve, grâce à son bourrelet 43 appliqué sur la surface 44, une position de repos, qui est celle de la figure 1, et pour laquelle un faible intervalle "i" sépare la surface active 57 du clapet 29 de l'orifice correspondant 27.

Les états de fonctionnement de l'électro-vanne doivent, soit amener la pression d'alimentation présente à l'ouverture 20 vers l'ouverture d'utilisation 21, soit relier cette dernière à l'ouverture d'échappement 22, ce qui est obtenu à l'état de repos représenté à la figure 1. Lorsque la bobine de l'électro-aimant est alimentée en courant, le noyau plongeur 7 se déplace vers le haut de la figure en effectuant une course égale à l'entrefer "e" jusqu'au moment où l'extrémité 8 vient buter sur la surface 9. Si le rapport des bras de levier du levier 41 est égal à deux, cet entrefer sera légèrement supérieur à une distance égale à "i/2". Au cours de ce déplacement, la surface active 59 du clapet 36 quitte l'orifice 35 et celui-ci est d'abord ouvert; la face active 57 du clapet 29 est ensuite rapidement amenée contre l'orifice 27 de sorte que la liaison entre les ouvertures 20 et 21 est établie.

Une disposition des clapets telle que celle qui vient d'être décrite, présente l'avantage de faire que seules les positions particulières des faces actives des clapets par rapport aux orifices correspondants doivent être prises en compte, d'une part, pour déterminer la position de repos du noyau, et, d'autre part, la course utile de celui-ci. Comme la position relative de la face active 59 du clapet 36 par rapport à la face 11 peut être définie avec une grande précision, par exemple par compression axiale, il est très aisé de donner, au montage, à la pièce annulaire 34 une position appropriée par rapport à la face 14. Par ailleurs, la position de la pièce annulaire 26 peut également être donnée avec une grande précision par rapport à la face 14; enfin, la position relative des surfaces 56, 58 du levier 41 par rapport aux bossages 53, 54 peut également être obtenue avec une grande précision par exemple au cours d'une opération d'estampage.

L'alignement des surfaces actives des clapets avec le siège des orifices est par ailleurs rigoureusement obtenu en raison d'une part du guidage XX' du noyau plongeur portant le clapet 36, et, d'autre part, de la liberté d'orientation qui est laissée au clapet libre 29 dans l'évidement 28a. Dans une variante de réalisation, visible à la figure 4, le levier 41' comporte deux ouvertures 61, 62 qui sont traversées respectivement par les cols 49, 50. On peut naturellement substituer au dispositif d'articulation d'axe ZZ' autour duquel oscille le précédent levier 41, un système de pivot 63, 64 tel que représenté sur cette même figure; le mode de réalisation précédent est toutefois préféré en raison de sa simplicité, de sa facilité de montage dans le plan PP', et de la bonne précision qu'il peut procurer lorsque les surfaces 44, 45 sont obtenues au cours d'une opération de moulage du corps 13.

Dans le mode de réalisation illustré aux figures 1 à 3, l'axe ZZ' du levier 41 est maintenu en position, d'une part, grâce à la coopération du bourrelet 43 avec le couvercle 40 et, d'autre part, grâce à la coopération du fond 65 de la fourche 46 avec le col 49 de la pièce annulaire 34.

Il est clair que si, pour des raisons de facilité de montage et de réduction d'encombrement, la disposition de la chambre 38 et du levier 41 a été choisie perpendiculairement à l'axe XX' de la pièce mobile 7, des dispositions inclinées de cette chambre et de ce levier pourraient également être choisies pour répondre à certains impératifs géométriques; dans ce cas les axes $X_1X'_1$ et $Y_1Y'_1$ des orifices pourraient ne pas être parallèles entre eux, tout en restant sensiblement perpendiculaires à des portions successives du levier. L'intérêt de l'utilisation d'un levier de transmission tel que 41 et des dispositions prises par ailleurs peut être expliqué en exposant les étapes successives qui doivent être franchies lors de l'élaboration de l'électro-vanne.

La puissance minimum de l'électro-aimant devant actionner le noyau est déterminée par la nécessité d'assurer à l'orifice 35, d'une part, lorsqu'il est ouvert et pour une pression déterminée, un débit suffisant dans un intervalle suffisamment court, et, d'autre part, lorsqu'il est fermé, une étanchéité parfaite; les deux premiers paramètres donnent les valeurs de diamètre "$\emptyset_1$" de cet orifice et la course "e" du clapet; si l'on appelle $F_0$ la force exercée par le ressort 10 lorsque l'orifice 35 est fermé, celle-ci sera choisie pour, d'une part, contrebalancer la force $f_1$ exercée sur le clapet par la pression, et, d'autre part, effectuer une compression élastique $f_2$ du clapet sur le siège de l'orifice 35; donc $F_0 = f_1 + f_2$, ou l'on choisit par exemple $f_2 = f_1$, soit $F_0 = 2 f_1$. Les données $\emptyset_1$ et "e" et la valeur $f_2$ permettent donc de calculer les ampères-tours nécessaires et suffisants que doit avoir l'électro-aimant.

La précision donnée à la position de repos de l'électro-aimant ne dépend que des tolérances effectant la distance qui sépare les faces 59 et 8', et qui sépare la face 8' et le siège de l'orifice 35; grâce a une mise a niveau automatisée de cette face 59 par rapport à la face 8', les écarts correspondants sont considérablement réduits.

On constate qu'à l'entrefer "e" correspond une course de l'extrémité 51 du levier 41 sensiblement égale à "2e" dans le mode de réalisation qui a été présenté.

Si l'on veut donner à l'orifice 27 et au clapet 29 des conditions de fonctionnement comparables à celles qui régissent le fonctionnement de l'orifice 35 et du clapet 36, on constate que la course "i" nécessaire du clapet 29 devra être au moins égale à "e", ce qui peut être obtenu de façon très aisée par un enfoncement convenable de la pièce annulaire 26 au cours d'une opération ne nécessitant aucune précaution particulière de tolérance. par suite, la longueur L sera supérieure à 1.

Si le diamètre $\emptyset_2$ de l'orifice 27 est égal au diamètre $\emptyset_1$, la force G exercée par la pression sur le clapet 29 pour fermer l'orifice sera uniquement utilisée pour effectuer une compression élastique du clapet que l'on choisira égale à $f_2$ pour que les deux clapets travaillent dans de mêmes conditions de compression.

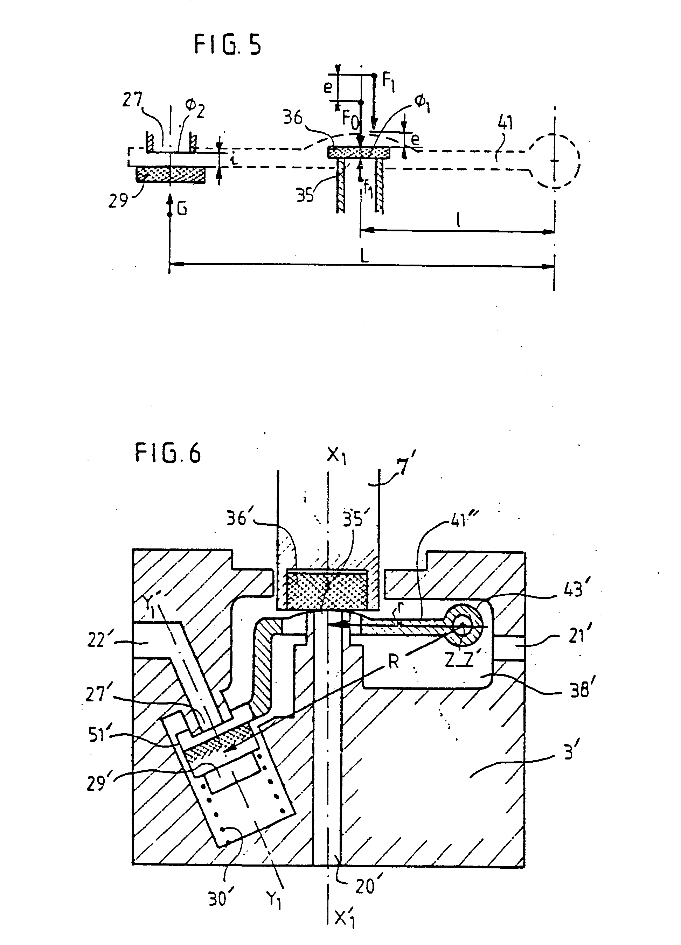

Si, par contre, on souhaite donner aux orifices des diamètres $\emptyset_2$, $\emptyset_1$ différents tout en conservant l'identité des compressions, par exemple pour que la vidange de la chambre 38 s'effectue très rapidement, on modifiera le rapport

$$\frac{L}{I}$$

du bras de levier, (voir figure 5); la modification de ce rapport sera effectuée pour que la force $F_1$, exercée par le ressort 10 lorsque le noyau 8 est en butée contre la surface 9, soit supérieure à $G \times \dfrac{L}{I}$

afin que l'ouverture du clapet 26 puisse s'effectuer normalement.

Comme $F_1$ est choisi très légèrement superieur a $F_0$ en raison de la faible course de compression "e", on peut écrire, en négligeant le rôle du ressort 30:

$$F_1 \neq F_0 \geqslant G \times \frac{L}{l}$$

$$\text{ou} \quad \frac{F_0}{G} > \frac{L}{l}$$

Avec les notations précédentes, cette inégalité devient

$$\frac{L}{l} \leqslant \left(\frac{\phi_1}{\phi_2}\right)^2 + \frac{\phi_1}{\phi_2}, \text{ et si } \phi_1 = \phi_2 \quad L < 2\, l.$$

Il est naturellement possible de choisir également le rapport

$$\frac{L}{l}$$

en fonction de compressions différentes des clapets. Enfin un calcul complet devrait faire intervenir les caractéristiques élastiques du ressort 10 avec par exemple $F_1 = KF_0$.

Le mode de réalisation illustré, dans lequel le plan P où est placé le levier est sensiblement perpendiculaire à l'axe XX', a été choisi pour donner au corps de vanne un encombrement minimum, dans le cadre d'une application aux électro-vannes de commande de très petites dimensions, où les ouvertures d'utilisation d'entrée de pression et d'échappement sont placées sur une même face de section voisine de 15 x 15 mm.

Il est clair que l'on peut, pour des applications différentes, modifier la disposition des ouvertures et choisir des orientations différentes du levier et des orifices sans pour autant sortir du cadre de l'invention; un tel exemple est représenté schématiquement à la figure 6; dans cette figure où les références affectées d'un indice désignent des organes correspondant à ceux de la figure 1, il est clair que l'on doit prendre en considération les rayons R et r qui sont équivalents aux longueurs L et l.

Enfin, si la qualité du matériau métallique ou plastique utilisé pour le corps 3 de la vanne le permet, les orifices 35, 26 pourront être obtenus par usinage direct de ce corps ou par une opération de moulage.

## Revendications

1. Electro-vanne comprenant, d'une part, un électro-aimant (2) ayant une pièce mobile magnétisable (7) guidée axialement qui est rappelée par un ressort (10) dans une première position de repos et qui est attirée en butée dans une seconde position de travail par la culasse de cet électro-aimant, lors de l'excitation de la bobine (6), et, d'autre part, un corps de vanne (3) qui est associé à cet électro-aimant (2) et dans une cavité (38) duquel se déplacent, en regard de deux orifices (35, 27) s'ouvrant en sens inverse et reliés respectivement à une ouverture d'entrée de pression (20) et à une ouverture d'échappement (22), deux faces d'obturation de clapet relié à la pièce mibile (7) au moyen d'une pièce de transmission pivotante (41) dont l'une obture l'orifice de pression (35) lorsque la pièce mobile (7) est au repos, tandis que l'autre obture l'orifice d'échappement (27) lorsque la pièce mobile (7) est en position de travail, de façon à relier à l'un de ces deux orifices, une ouverture d'utilisation (21) qui communique avec la cavité (38) et qui débouche sur une face externe du corps comme les deux autres ouvertures (20, 22),
caractérisé en ce que ces orifices (35, 27, respectivement 35', 27') sont placés à des distances différentes (L, l, respectivement R, r) de l'axe de rotation (ZZ') de la pièce de transmission pivotante (41, respectivement 41') associée aux mouvements de la pièce mobile (7, respectivement 7') pour coopérer avec des faces d'obturation (59, 57) appartenant à deux clapets distincts (36, 29 respectivement 36', 29') et de façon telle que (L > 1, respectivement R > r), le clapet (36) de l'orifice de pression (35) étant porté par une extrémité (37) de cette pièce mobile, tandis que la face d'obturation (57) de l'autre clapet (29) coopère élastiquement (30), d'une part, uniquement avec l'orifice d'échappement (27) lorsque la pièce mobile est au travail, et, d'autre part, uniquement avec une extrémité mobile (51) de la pièce de transmission contre laquelle cette face (57) s'appuie, lorsque la pièce mobile est au repos.

2. Electro-vanne selon la revendication 1, caractérisée en ce que la pièce de transmission pivotante est un levier plat (41) qui est placé dans un plan (PP') sensiblement perpendiculaire à la direction (XX') de déplacement de la pièce mobile, les faces d'obturation (57, 59) étant placées sensiblement dans ce même plan.

3. Electro-vanne selon la revendication 1 ou 2, caractérisée en ce que la pièce de transmission est un levier (41) pivotant autour d'un axe (ZZ') perpendiculaire aux axes (XX', YY') des orifices (35, 27), la liaison étant effectuée par appui de l'extrémité (37) de la pièce mibile (7) sur des bossages (53, 54) de ce levier et sensiblement dans l'axe (XX') de l'orifice de pression (35), ce dernier étant placé entre cet axe de pivotement (ZZ') et l'axe (YY') de l'orifice d'échappement (27).

4. Electro-vanne selon la revendication 2 ou 3, caractérisée en ce que ce levier (41) est un levier libre qui pivote autour d'une articulation (43) coopérant avec deux faces opposées (44, 45) de la cavité (38) dans laquelle débouchent les orifices, (35, 27) l'axe (XX') étant sensiblement placé à mi-distance de celle séparant les axes (YY') et (ZZ').

5. Electro-vanne selon la revendication 2, 3 ou 4, caractérisée en ce que chacun des orifices (27, 35) est porté par une piece de revolution (26, 34) qui est emmanchée dans le corps (13) de la vanne (3) et qui traverse une ouverture correspondante (62, 61) du levier (41').

6. Electro-vanne selon la revendication 5, caractérisée en ce que les deux ouvertures (62, 61) communiquent entre elles de façon à donner à la portion de levier (41) qui s'étend entre les axes (XX', YY') la forme d'une fourche (46) pouvant être engagée latéralement dans la cavité (38).

7. Electro-vanne selon l'une des revendications 2 à 6, caractérisée en ce que l'extrémité (37) de la pièce mobile (7) présente une surface annulaire (55) qui entoure le clapet (36) coopérant avec l'orifice de pression et qui s'appuie sur un bossage (53, 54) du levier (41).

8. Electro-vanne selon l'une des revendications 2 à 7, caractérisée en ce que la cavité (38) s'ouvre sur une face (39) opposée aux ouvertures de pression d'utilisation et d'échappement (20, 21, 22) et est obturée par un couvercle étanche (40) qui limite la position de l'axe de pivotement (ZZ') du levier (41).

9. Electro-vanne selon l'une des revendications 1 à 8, caractérisée en ce que les couples de distances (L, l), respectivement (R, r) vérifient sensiblement la relation:

$$\frac{L}{l} \leqslant \left(\frac{\emptyset_1}{\emptyset_2}\right)^2 + \frac{\emptyset_1}{\emptyset_2} \quad \text{respectivement} \quad \frac{R}{r} \leqslant \left(\frac{\emptyset_1}{\emptyset_2}\right)^2 + \frac{\emptyset_1}{\emptyset_2}$$

où $\emptyset_1$ et $\emptyset_2$ représentent les diamètres des orifices de pression (35, 35') respectivement d'échappement (27, 27').

**Patentansprüche**

1. Elektromagnetisches Ventil, das einerseits enthält: einen Elektromagneten (2) mit einem magnetisierbaren beweglichen Teil (7), das axial geführt wird und von einer Feder (10) in eine erste Ruhestellung zurückversetzt wird und, von Joch des besagten Elektromagneten angezogen wird, wenn die Wicklung (6) erregt wird, in einer zweiten Arbeitsstellung zum Anschlag kommt und andererseits einen, dem Elektromagneten (2) zugeordneten, Ventilkörper (3) in dessen Hohlraum (38) sich gegenüber von zwei Öffnungen (35, 27), die in entgegengesetzte Richtungen münden und jeweils mit einer Drucköffnung (20) und einer Austrittsöffnung (22) verbunden sind, zwei Ventilverschlussflächen bewegen, die mit den beweglichen Teil (7) durch ein schwenkbares Übertragungsteil (41) verbunden sind und deren eine die Drucköffnung (35) verschliesst, wenn das bewegliche Teil (7) sich in Ruhestellung befindet, während die andere die Austrittsöffnung (27) verschliesst, wenn das bewegliche Teil (7) sich in der Arbeitsstellung befindet, um an eine der besagten beiden Öffnungen eine Verbrauchsöffnung (21) anzuschliessen, die mit dem Hohlraum (38) in Verbindung steht und, wie die beiden anderen Öffnungen (20, 22), auf einer Aussenseite des Körpers endet,
dadurch gekennzeichnet, dass besagte Öffnungen (35, 27, bzw. 35', 27') sich in verschiedener Entfernung (L, l, bzw. R, r) von der Drehachse (ZZ') des schwenkbaren Übertragungsteils (41, bzw. 41') befinden, welches den Bewegungen des beweglichen Teils (7, bzw. 7') zugeordnet ist, um mit Verschlussflächen (59, 57) zusammenzuarbeiten, welche zu zwei verschiedenen Ventilen gehören (36, 29, bzw. 36', 29') und zwar in der Weise, dass (L<l, bzw. R<r), wobei das Ventil (36) der Drucköffnung (35) von einem Ende (37) des besagten beweglichen Teils (7) getragen wird, während die Verschlussfläche (57) des anderem Ventils (29) elastisch (30) einerseits nur mit der Austrittsöffnung (27) zusammenarbeitet, wenn das bewegliche Teil arbeitet, und andererseits nur mit einem beweglichen Ende (51) des Übertragungsteils, auf dem diese Fläche (57) aufliegt wenn das bewegliche Teil sich in Ruhestellung befindet.

2. Elektromagnetisches Ventil nach Anspruch 1, dadurch gekennzeichnet, dass das schwenkbare Übertragungsteil ein flacher Hebel (41) ist, der in einer Ebene (PP') angebracht ist, die im wesentlichen senkrecht zur Bewegungsrichtung (XX') des beweglichen Teils ist, und dass die Verschlussflächen (57, 59) sich in wesentlichen in der gleichen Ebene befinden.

3. Elektromagnetisches Ventil nach Anspruch 1 oder 2,
dadurch gekennzeichnet, dass das Übertragungsteil ein Hebel (41) ist der um eine Achse (ZZ'') schwingt, welche senkrecht zu den Achsen (XX', YY') der Öffnungen (35, 27) verläuft, und die Verbindung hergestellt wird durch Anschlag des Endes (37) des beweglichen Teils (7) auf Höcker (53, 54) dieses Hebels und im wesentlichen in der Achse (XX') der Drucköffnung (35), wobei letztere zwischen besagter Schwenkachse (ZZ') und der Achse (YY') der Austrittsöffnung (27) angeordnet ist.

4. Elektromagnetisches Ventil nach Anspruch 2 oder 3,
dadurch gekennzeichnet, dass besagter Hebel (41) ein freier Hebel ist, der um ein Gelenk (43) schwingt, das mit zwei gegenüberliegenden Flächen (44, 45) des Hohlraumes (38) zusammenarbeitet, in den die Öffnungen (35, 27) münden, wobei die Achse (XX') im wesentlichen in gleicher Entfernung von den Achsen (YY') und (ZZ') angebracht ist.

5. Elektromagnetisches Ventil nach Anspruch 2, 3 oder 4

dadurch gekennzeichnet, dass jede der Öffnungen (27, 35) von einem Rotationsteil (26, 34) getragen wird, welches in den Ventil(3) körper (13) eingesetzt ist und eine entsprechende Öffnung (62, 61) des Hebels (41') durchquert.

6. Elektromagnetisches Ventil nach Anspruch 5, dadurch gekennzeichnet, dass die beiden Öffnungen (62, 61) miteinander in Verbindung stehen um dem Hebel (41) abschnitt, der sich zwischen den Achsen (XX', YY') befindet, die Form einer Gabel (46) zu verleihen, die seitlich in den Hohlraum (38) eingeführt werden kann.

7. Elektromagnetisches Ventil nach einem der Ansprüche 2 bis 6, dadurch gekennzeichnet, dass das Ende (37) des beweglichen Teils (7) eine ringförmige Fläche (55) besitzt, welche dasjenige Ventil (36) umgibt, das mit der Drucköffnung zusammenarbeitet und welche gegen einen Höcker (53, 54) des Hebels zum Anschlag kommt.

8. Elektromagnetisches Ventil nach einem der Ansprüche 2 bis 7, dadurch gekennzeichnet dass der Hohlraum (38) gegen eine Fläche (39) hin offen ist, die den Druck-, Verbrauchs- und Austrittsöffnungen (20, 21, 22) gegenüberliegt und von einem undurchlässigen Deckel (40) verschlossen wird, der die Stellung der Drehachse (ZZ') des Hebels (41) begrenzt.

9. Elektromagnetisches Ventil nach einem der Ansprüche 1 bis 8, dadurch gekennzeichnet, dass die Entfernungspaare (L, l) bzw. (R, r) im wesentlichen die Gleichung

$$\frac{L}{l} \leqslant \left(\frac{\emptyset_1}{\emptyset_2}\right)^2 + \frac{\emptyset_1}{\emptyset_2} \quad \text{bzw.} \quad \frac{R}{r} \leqslant \left(\frac{\emptyset_1}{\emptyset_2}\right)^2 + \frac{\emptyset_1}{\emptyset_2}$$

bestätigen wobei $\emptyset_1$ und $\emptyset_2$ die Durchmesser der Druck-(35, 35'), bzw. Austrittsöffnungen (27, 27') darstellen.

## Claims

1. In an electromagnetic valve comprising, on the one hand, an electromagnet (2) having an axially guided magnetizable mobile piece (7) which is returned by a spring (10) to a first rest position and which is attracted in abutment into a second working position by the yoke of this electromagnet, when the coil (6) is energized and, on the other hand, a valve body (3) which is associated with said electromagnet (2) and in a cavity (38) of which there move, facing two orifices (35, 27) opening in opposite directions and connected respectively to a pressure intake opening (20) and to a discharge opening (22), two valving faces of a valving means connected to the movable piece (7) by means of a pivoting transmission piece (41) one of which closes the pressure orifice (35) when the mobile piece (7) is at rest whereas the other closes the discharge orifice (27) when the mobile piece (7) is in the working position so as to connect to one of these two orifices a user opening (21) which communicates with the cavity (38) and which opens into an external face of the body like the other two openings (20, 22), characterized in that said openings (35, 27, respectively 35' 27') are placed at different distances (L, l, respectively R, r) from the axis of rotation (ZZ') of the pivoting transmission piece (41, respectively 41') associated with the movements of said mobile piece (7, respectively 7') for cooperation with valving faces (59, 57) belonging to two separate valving means (36, 29, respectively 36', 29') and so that (L > l, respectively R > r), the valving means (36) of the pressure orifice (35) being carried by one end (37) of said mobile piece whereas the valving face (57) of the other valving means (29) cooperates resiliently (30), on the one hand, solely with the discharge orifice (27) when the mobile piece is working and on the other hand, solely with a mobile end (51) of said transmission piece against which said face (57) bears, when said nobile piece is at rest.

2. The electromagnetic valve as claimed in claim 1, characterized in that said pivoting transmission piece is a flat lever (41) which is placed in a plane (PP') substantially perpendicular to the direction (XX') of movement of said mobile piece, the valving faces (57, 59) being placed substantially in this same plane.

3. Electromagnetic valve as claimed in claim 1 or 2, characterized in that said transmission piece is a lever (41) pivoting about an axis (ZZ') perpendicular to the axes (XX', YY') of said orifices (35, 27), the connection being provided by said end of said mobile piece (7) bearing on bosses (53, 54) of this lever and substantially in the axis (XX') of the pressure orifice (35) this latter being placed between said pivoting axis (ZZ') and the axis (YY') of the discharge orifice (27).

4. The electromagnetic valve as claimed in claim 2 or 3, characterized in that said lever (41) is a free lever which pivots about a pivoting means (43) cooperating with two opposite faces (44, 45) of the cavity (38) into which the orifices (35, 27) open, said axis (XX') being placed substantially half-way between the axes (YY') and (ZZ').

5. The electromagnetic valve as claimed in claim 2, 3 or 4, characterized in that each of said orifices (27, 35) is carried by a piece of revolution (26, 34) which is fitted into the body (13) of the valve (3) and which passes through a corresponding opening (62, 61) in said lever (41').

6. The electromagnetic valve as claimed in claim 5, characterized in that two openings (62, 61) communicate together so as to give to the lever portion (41) which extends between the axes (XX', YY') the shape of a fork (46) which may be engaged laterally in said cavity (38).

7

7. The electromagnetic valve as claimed in one of claims 2 to 6, characterized in that the end (37) of said mobile piece (7) has an annular surface (55) which surrounds the valving means (36) cooperating with the pressure orifice and which bears on a boss (53, 54) of said lever (41).

8. The electromagnetic valve as claimed in one of claims 2 to 7, characterized in that said cavity (38) opens into a face (39) opposite the pressure, utilization and discharge openings (20, 21, 22) and is closed by a sealed cover (40) which limits the position of the pivoting axis (ZZ') of lever (41).

9. The electromagnetic valve as claimed in one of claims 1 to 8, characterized in that the pairs of distances (L, I) respectively (R, r) confirm substantially the relationship:

$$\frac{L}{I} \leqslant \left(\frac{\emptyset_1}{\emptyset_2}\right)^2 + \frac{\emptyset_1}{\emptyset_2} \text{ respectively } \quad \frac{R}{r} \leqslant \left(\frac{\emptyset_1}{\emptyset_2}\right)^2 + \frac{\emptyset_1}{\emptyset_2}$$

where $\emptyset_1$ and $\emptyset_2$ represent the diameters of the pressure (35, 35') and discharge (27, 27') orifices respectively.

FIG.1

FIG. 2

FIG. 3

FIG. 4

3

# FIG. 5

# FIG. 6